# EUROPEAN PATENT SPECIFICATION

(11) **EP 3 007 384 B1**
(45) Date of publication and mention of the grant of the patent: **10.03.2021**
(21) Application number: 13892067.3
(22) Date of filing: 22.08.2013
(51) Int. Cl.: H04B 10/272, H04L 29/06

(54) **METHOD, APPARATUS AND SYSTEM FOR TERMINAL AUTHENTICATION IN PASSIVE OPTICAL NETWORK**
VERFAHREN, VORRICHTUNG UND SYSTEM ZUR ENDGERÄTEAUTHENTIFIZIERUNG IN PASSIVEM OPTISCHEM NETZWERK
PROCÉDÉ, APPAREIL, ET SYSTÈME D'AUTHENTIFICATION DE TERMINAL DANS UN RÉSEAU OPTIQUE PASSIF

(43) Date of publication of application: 13.04.2016
(73) Proprietor: Huawei Technologies Co., Ltd., Longgang District Shenzhen, Guangdong 518129 (CN)
(72) Inventor: ZHANG, Lun, Shenzhen Guangdong 518129 (CN); WAN, Xifeng, Shenzhen Guangdong 518129 (CN)
(74) Representative: Gill Jennings & Every LLP
(86) International application number: PCT/CN2013/082079
(87) International publication number: WO 2015/024235

(56) References cited:
- EP-A1- 2 007 063
- EP-A1- 2 426 866
- CN-A- 101 478 702
- CN-A- 101 902 447

## Description

### TECHNICAL FIELD

The present invention relates to the field of network communications technologies, and in particular, to a terminal authentication method, apparatus, and operation management system in a passive optical network.

### BACKGROUND

A passive optical network (PON) is an optical network of a point to multi-point (P2MP) structure. At present, representative PON technologies are the gigabit-capable passive optical network (GPON) and Ethernet passive optical network (EPON), where a GPON technology has features such as a high line rate and an improved maintenance and management function. A typical PON network is formed by an optical line terminal(OLT), an optical network unit (ONU), and an optical distribution network (ODN). The PON has features of a P2MP structure and downlink broadcasting; therefore, to configure different service data for ONUs of different sites and control security of registration, the OLT needs to perform authentication on the ONU. The ONU/ONT authentication is implemented in a process of registering the ONU/ONT. Generally, ONU authentication manners include Serial Number (SN) authentication, password authentication, and Logical ONU Identifier (LOID) plus Password authentication. For example, the SN authentication is: The SN of the ONU is recorded on an ONU installation site, and an same SN is then input on an OLT side; the OLT receives the SN reported by the ONU in the registration, and verifies that both SNs are consistent, that is, the authentication succeeds. Generally, the following steps are included:
Step 1: The OLT sends an initialization and ready message to each ONU.
Step 2: The OLT sends a message for requesting the ONU to report the SN to each ONU.
Step 3: After receiving the message for requesting the SN, the ONU sends a SN message to the OLT.
Step 4: The OLT receives the SN and performs detection on the SN.
Step 5: The OLT completes ranging of the ONU/ONT to which an ONU-ID is allocated.
Step 6: The OLT performs authentication on the ONU according to the received SN. After the authentication succeeds, the ONU registration succeeds.

At present, for each of the foregoing ONU authentication manners, authentication information needs to be manually input on the OLT side. For example, in the foregoing authentication process, the SN or password information needs to be manually input. The manual authentication process is tedious, and an error may occur easily. In addition, the authentication takes a long time, and user experience is poor.

EP 2426866A1 discloses that the OLT is discovered and authenticated according to the logic registration ID of the OLT (e.g. the logic registration ID of the OLT is used to authenticate the OLT), the logic registration ID may be a password, or a logic identifier allocated by the operator as required, or information related to a device such as the OLT or the ONU/ONT, for example, a device type, a device version.

EP 2007063A1 discloses that the OLT receives a password from the ONU.

### SUMMARY

In view of this, embodiments of the present invention provide a terminal authentication method, apparatus, and system in a passive optical network. It is unnecessary to manually input authentication information on an OLT side, which improves automation and flexibility of authentication and enhances user experience.

According to a first aspect, an embodiment of the present invention provides a terminal authentication method in a passive optical network, PON, wherein the PON comprises an optical line terminal, OLT and at least one optical network terminal, ONT, the OLT is connected to the at least one ONT by using an optical distribution network, and an authentication parameter is preconfigured on the OLT; and the method includes: receiving, by the OLT, a registration request that carries an authentication parameter and is sent by the ONT, where the authentication parameter is used to identify the ONT of a same type; wherein the ONT of a same type is an ONT applied to a Gigabit-Capable Passive Optical Network, GPON or an ONT applied to an Ethernet passive optical network, EPON, and determining, by the OLT, that the authentication parameter sent by the ONT matches the authentication parameter preconfigured on the OLT, and
confirming that the OLT of the same type is an authorized ONT.

In a first possible implementation manner of the first aspect, the method further includes: recording, by the OLT, a terminal serial number obtained from the authorized terminal, and recording a terminal ID allocated for the authorized ONT.

In a second possible implementation manner of the first aspect, the authentication parameter is transmitted by using an ONT management and control interface (OMCI) message.

In a third possible implementation manner of the first aspect, before the receiving, by the OLT, a registration request that carries the authentication parameter and is sent by the ONT, the method further includes: receiving, by the OLT, a terminal serial number sent by the ONT, and allocating a temporary terminal ID for the ONT; and requesting, by the OLT, the authentication parameter of the ONT after completing ranging of the terminal with the temporary terminal ID.

With reference to the first aspect or the first possible implementation manner of the first aspect, in a fourth possible implementation manner, the recording, by the OLT, a terminal serial number obtained from the authorized terminal, and recording a terminal ID allocated for the authorized terminal includes: recording, by the OLT, a serial number of the authorized terminal received by the OLT; and allocating, by the OLT, a formal terminal ID for the authorized terminal, and recording the formal terminal ID of the authorized terminal.

According to a second aspect, an embodiment of the present invention further provides an OLT, which includes: a first storage module, configured to store an authentication parameter on an optical network terminal, ONT, wherein the authentication parameter is used to identify a type of the ONT; a receiving module, configured to receive a registration request carries an authentication parameter sent by the ONT, where the authentication parameter is used to identify a type of the ONT; a processing module, configured to determine whether that the authentication parameter sent by the ONT matches the authentication parameter preconfigured on the OLT, and if yes, authorizing that the ONT of the same type is an authorized ONT; wherein the type of the ONT is an ONT applied to a Gigabit-Capable Passive Optical Network, GPON, or an ONT applied to an Ethernet passive optical network, EPON.

In a first possible implementation manner of the second aspect, the receiving module is further configured to receive a terminal serial number.

In a second possible implementation manner of the second aspect, the OLT further includes: a distribution module, configured to allocate a terminal ID for the ONT; and a second storage module, configured to, after authorizing that the ONT of the same type is an authorized ONT, store the serial number of the ONT received by the receiving module and the terminal ID output by the distribution module.

In a third possible implementation manner of the second aspect, the distribution module includes: a determining submodule, configured to determine whether the serial number of the ONT received by the receiving module is recorded in the serial number of the ONT stored in the second storage module; a distribution submodule, configured to according to a determination result of the determining submodule, if yes, allocate a formal terminal ID for the ONT, and if no, allocate a temporary terminal ID for the terminal; and trigger ranging processing of the OLT.

In a fourth possible implementation manner of the second aspect, the receiving module includes: a first request submodule, configured to request a terminal serial number of the ONT; a second request submodule, configured to, after the OLT on which the second request submodule is located completes ranging, request the authentication parameter of the ONT; and a receiving submodule, configured to receive the authentication parameter and serial number of the ONT.

According to a third aspect, an embodiment of the present invention further provides an optical network system. The optical network system includes an OLT and at least one ONT, where the OLT is connected to the at least one ONT by using an optical distribution network, ODN, and characterized in that, the OLT is the OLT described in the second aspect or any one of the first to the fourth possible implementation manners of the second aspect; and the ONT, configured to, according to a received request of the OLT, send an authentication parameter to the OLT.

In a first possible implementation manner of the third aspect, the ONT is further configured to, according to a request of the OLT, send a terminal serial number to the OLT.

It can be learned from the description of the foregoing technical solution that, in an implementation manner of the present invention, a consistent and corresponding authentication parameter is separately preconfigured on an optical line terminal side and on a terminal side, so that an optical line terminal may authenticate an authorized terminal of a same type, and an optical line terminal automatically saves a serial number sent by the terminal locally, thereby configuring a service for the optical line terminal, without needing to manually input authentication information, that is, plug and play, which improves automation and flexibility of authentication and enhances user experience.

### BRIEF DESCRIPTION OF DRAWINGS

To describe the technical solutions in the embodiments of the present invention or in the prior art more clearly, the following briefly introduces the accompanying drawings required for describing the background and the embodiments. Apparently, the accompanying drawings in the following description show merely some embodiments of the present invention, and a person of ordinary skill in the art may still derive other drawings or embodiments according to these accompanying drawings or the description without creative efforts; and the present invention aims to cover all these derived drawings or embodiments.
FIG. 1 is a schematic diagram of an architecture of a passive optical network according to the present invention;
FIG. 2 is a schematic flowchart of a terminal authentication method in a passive optical network according to an embodiment of the present invention; and
FIG. 3 is a schematic diagram of a module of an optical line terminal according to an embodiment of the present invention.

### DETAILED DESCRIPTION OF EMBODIMENTS

To make the objectives, technical solutions, and advantages of the present invention clearer and more comprehensible, the following further describes the present invention in detail with reference to the accompanying drawings and embodiments. It should be understood that the specific embodiments described herein are merely used to explain the present invention but are not intended to limit the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

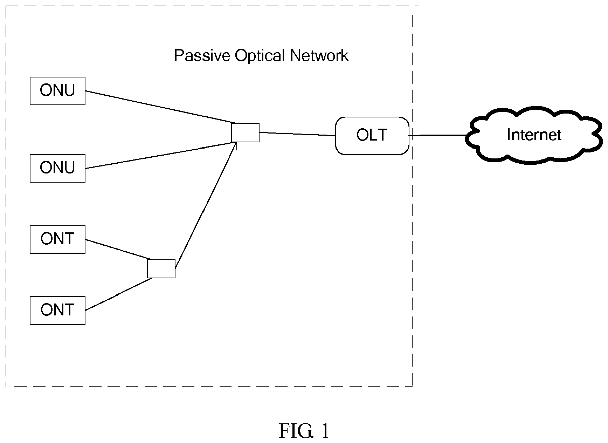

FIG. 1 is a schematic diagram of an architecture of an optical network on which the embodiments of the present invention are based; As shown in FIG. 1, in an optical network system PON (Passive Optical Network, passive optical network), a plurality of optical network terminals (Optical Network Terminal, ONT) or optical network units (Optical Network Unit, ONU) is connected to an optical line terminal (Optical Line Terminal, OLT) by using an optical distribution network (Optical Distribution Network, ODN). The OLT provides a network side interface for the PON system for connecting one or more ODNs. The ODN is a passive optical splitting device and splits OLT downlink data and transmits to each ONU, meanwhile, combines uplink data of a plurality of ONUs/ONTs and transmits to the OLT. The ONU provides a user side interface for the PON system. In the uplink, the ONU is connected to the ODN. If the ONU directly provides a user port function, for example, an Ethernet user port for a PC (Personal Computer, personal computer) to access the Internet, the ONU is referred to as an ONT. The ONU mentioned in the following uniformly refers to an ONU and ONT.

In the embodiments of the present invention, an authentication parameter is preconfigured on an optical line terminal to implement automatic authentication of an optical network terminal of a same type. For the convenience of description, in the present invention, the optical line terminal is referred to as OLT for short, and the optical network terminal is referred to as ONU for short. The following describes an ONU detection and authentication method in a PON network in detail according to an implementation manner of the present invention.

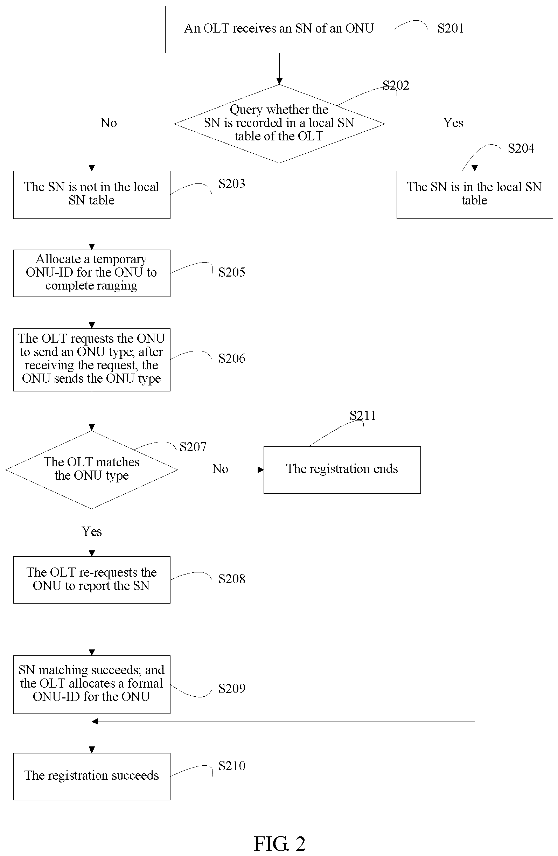

The following describes a terminal authentication method according to the implementation manner of the present invention with reference to an accompanying drawing, as shown in FIG. 2.

S201. An OLT receives an SN sent by an ONU.

In this step, before the ONU sends a registration request message that carries the SN to the OLT, the OLT firstly sends an initial state message and ready state message to the ONU, and then requests the ONU/ONT to send a serial number SN request to the OLT. Both the initial state message and ready state message are the prior art, and details are not described herein again.

S202. The OLT queries whether the SN is recorded in a local SN table.

In this step, the OLT locally stores an SN table, as shown in Table 1 (content in the table is exemplary description):

**Table 1 Serial number SN table**

| **No.** | **SN** |
|---|---|
| 1 | 123456 |
| 2 | 568923 |
| 3 | ...... |

S203. If the SN is not recorded in the local SN table, save the SN, and then go to step S205.

S204. If the SN is already recorded in the local SN table, go to step S210.

If the SN is already recorded in the local SN table, authentication succeeds, and service information is directly delivered to the ONU.

S205. The OLT allocates a temporary ONU-ID (terminal ID) for the ONU and completes ranging.

That the OLT allocates a temporary terminal ID for the ONU may meet an implementation requirement of the ONU in a registration process. For example, when the ONU transmits the serial number SN to the OLT by using an uplink message, a temporary terminal ID may be firstly allocated for the ONU to complete a subsequent ranging procedure.

S206. The OLT requests the ONU to send an authentication parameter. After receiving the request, the ONU sends an authentication parameter.

The OLT transmits the authentication parameter by using the OMCI (ONT Management and Control Interface, ONT Management and Control Interface) protocol. After receiving the request, the ONU may also report authentication parameter information by using an OMCI message.

A specific structure of the foregoing OMCI message may be shown in Table 2.

**Table 2 Packet format of an OMCI message**

| **Message for requesting an authentication parameter** | | |
|---|---|---|
| **Byte** | **Content** | **Description** |
| 1∼2 | Transaction Correlation Identifier | Identifier priority |
| 3 | Message Type | Message type |
| 4 | Device identifier | 0x0A |
| 5∼8 | Message Identifier | Target entity and entity status |
| 9∼41 | Message Contents | Message content |
| 42∼50 | OMCI Trailer | OMCI trailer field |

In Table 2, the most significant bit in bytes 1 to 2 Transaction Correlation Identifier indicates a high or low priority of the Message: 1 indicates a high priority, and 0 indicates a low priority.

Message type is used to identify a type of the message, that is, which request is completed by the message.

Device Identifier, according to the definition in ITU-T G984.4, is -0x0A, which indicates OMCI.

The first two bytes of Message Identifier indicate a target entity, and the later two bytes indicate an entity status.

Message Contents carries the ONU authentication parameter information.

OMCI Trailer is a trailer field of OMCI.

The foregoing Table 2 is merely a specific example of a message for requesting an authentication parameter. In the implementation manner of the present invention, a message for transmitting an authentication parameter is not limited to the foregoing specific example, for example, a PLOAM message may be used to carry the authentication parameter.

S207. The OLT matches the received authentication parameter. If matching fails, go to S211.

In this step, the authentication parameter is preconfigured on the OLT, and herein the preconfiguring may be establishing an authentication parameter table in a host database of the OLT. The authentication parameter table is used to store parameter information of all ONUs connected to the OLT, as shown in Table 3. The preconfiguring may also be using an external input manner by the OLT, for example, by using a host command line and a network management system.

**Table 3 Authentication parameter table**

| **No.** | **Authentication parameter** |
|---|---|
| 1 | SmartAX MA5694 |
| 2 | SmartAX MA5600 |

Further, an authentication parameter is preconfigured on the ONU, herein the preconfiguring may be writing the authentication parameter into a memory of the ONU or using an external input manner by inputting an authentication parameter in the network management system or command line of the ONU. Certainly, authentication parameters preconfigured on the OLT and ONU should be the same and correspond in a one-to-one manner.

Herein the authentication parameter is, in the GPON and EPON, used to identify an ONU of a same type. The authentication parameter may be one of or any combination of: an ONU device name, software version information, ONU hardware version information, and a specific model of the ONU. For example, the ONU device name applied to the GPON (Gigabit-Capable Passive Optical Network, gigabit-capable passive optical network) is Smart AX MA5694, where the device name identifies an ONU of this type.

Further, after receiving the authentication parameter reported by the ONU, the OLT queries the authentication parameter table, as shown in Table 3. If data consistent with the reported authentication parameter exists in the table, it indicates that the authentication succeeds; if data consistent with the reported authentication parameter does not exist in the table, it indicates that the authentication fails, the authentication ends, and the ONT is kicked offline.

S208. If the matching succeeds, the OLT re-requests the ONU to report an SN.

If the matching of the authentication parameter succeeds, the OLT resends a message to the ONU to request an SN. After receiving the request, the ONU reports its own SN.

S209. SN matching succeeds. The OLT allocates a formal ONU-ID for the ONU.

In S203, the SN of the ONU has been saved already; therefore, the SN matching succeeds, and the OLT allocates a formal ONU-ID for the ONU to complete a subsequent ranging operation.

S210. The ranging is complete, and the registration succeeds.

After the ONU registration succeeds, the OLT delivers service information to the ONU.

S211. The registration fails and the authentication ends.

The ONU registration fails, and the OLT kicks the ONU offline. The authentication ends.

By using the foregoing technical solutions, the optical line terminal may be, during ONU registration and authentication, plug-and-play, without needing to input authentication information in the OLT and ONU, which improves automation and flexibility of authentication.

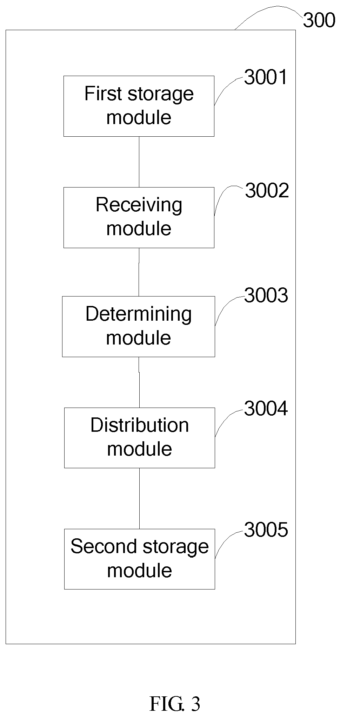

An embodiment of the present invention further provides a passive optical network optical line terminal 300, as shown in FIG. 3, including a first storage module 3001, a receiving module 3002, a determining module 3003, a distribution module 3004, and a second storage module 3005.

The first storage module 3001 is configured to store an authentication parameter of an optical network terminal. The authentication parameter stored in the first storage module 3001 may be configured by using an operation management system of the optical line terminal, or configured in an external input manner, for example, a command line and a Web page.

The receiving module 3002 is configured to receive a serial number SN, an authentication parameter, or a Password sent by the terminal ONU/ONT. The receiving module 3002 includes two subunits: a sending unit and a receiving unit. The sending unit is configured to send a message to the ONU/ONT to request an SN, an authentication parameter, and a Password; the receiving unit is configured to receive a message of the SN, authentication parameter, and Password reported by the ONU/ONT according to a request sent by the sending unit.

The determining module 3003 is configured to determine whether the authentication parameter received by the receiving module 3002 matches the authentication parameter stored in the first storage module3001, so as to determine whether the terminal is an authorized terminal. The determining module 3003 outputs determination result information. For example, the determining module 3003 outputs matching information or mismatching information.

The distribution module 3004 is configured to allocate a terminal ID for a terminal and output the terminal ID. The distribution module 3004 may allocate a terminal ID for a terminal before the determining module 3003 performs determining, or allocate a terminal ID for a terminal after the determining module 3003 performs determining.

The second storage module 3005 is configured to, after the determining module 3003 outputs the matching determination result information, store the authentication parameter received by the receiving module 3002 and the terminal ID output by the distribution module 3004. The authentication parameter and terminal ID stored in the second storage module 3005 are a terminal serial number and terminal ID of an authorized terminal that is automatically detected.

Further, the distribution module 3004 includes a determining submodule and a distribution submodule, and the receiving module 3002 includes a first request submodule, a second request submodule, and a receiving submodule.

The first request submodule sends to all ONUs/ONTs a request message for requesting an ONU/ONT to report an SN. The receiving submodule receives the SN reported by an ONU/ONT. The determining submodule, after the receiving submodule receives an SN reported by the ONU/ONT, determines whether the SN received by the receiving submodule is recorded by the second storage module 3005, that is, determining whether the received SN matches an SN stored in the second storage module 3005. If the determining submodule determines that the SN received by the receiving submodule is an SN recorded by the second storage module 3005, the determining submodule informs the distribution submodule of allocating a formal ONU-ID. If the determining submodule determines that the SN received by the receiving submodule is not an SN recorded by the second storage module 3005, the determining submodule informs the distribution submodule of allocating a temporary ONU-ID.

After receiving information of allocating a temporary ONU-ID from the determining submodule, the distribution submodule allocates a temporary ONU-ID for the terminal and triggers the optical line terminal 300 to perform ranging for the terminal. The optical line terminal 300 performs data interaction with the ONU/ONT allocated with a temporary ONU-ID and completes the ranging of the ONU/ONT allocated with a temporary ONU-ID.

The second request submodule, after the optical line terminal 400 completes the ranging, sends an authentication parameter request message to the ONU/ONT, where the authentication parameter request message may be implemented by using an OMCI request message or using a newly defined authentication parameter request message. The receiving submodule obtains the authentication parameter reported by the ONU/ONT from the received message.

The determining module 3003, after the receiving submodule receives the authentication parameter, performs verification on the authentication parameter received by the receiving submodule according to the authentication parameter stored in the first storage submodule 3001, that is, the determining module 3003 determines whether the authentication parameter received by the receiving submodule matches the authentication parameter stored in the first storage submodule 3001: if the authentication parameter received by the receiving submodule matches the authentication parameter stored in the first storage submodule 3001, if yes, authorizes that the ONU/ONT is an authorized terminal and informs the second storage module 3005 of recording the SN of the ONU/ONT; if the authentication parameter received by the receiving submodule does not match the authentication parameter stored in the first storage submodule 3001, confirms that the ONU/ONT is a non-authorized terminal, and directly terminates a registration procedure.

After the ONU/ONT is online again, a subsequent registration process is performed. The ONU/ONT reports its own SN to the OLT. After the receiving submodule receives the SN reported by the ONU/ONT, the determining submodule searches whether the SN is recorded in the second storage module 3005. If the determining submodule determines that the SN received by the receiving submodule is an SN recorded in the second storage module 3005, informs the distribution submodule of allocating a formal ONU-ID for the terminal. If the determining submodule determines that the SN received by the receiving submodule is an SN that is not recorded in the second storage module, informs the distribution submodule of allocating a temporary ONU-ID for the terminal.

In a process of the terminal going online again, the second storage module 3005 records the SN of the ONU/ONT already; therefore, the distribution submodule, after the receiving submodule receives the SN, searches the ONU-ID, allocates the searched ONU-ID as a formal ONU-ID to the terminal, and triggers the optical line terminal 300 to perform ranging for the optical network terminal. The optical line terminal 300 performs data interaction with the ONU/ONT allocated with a formal ONU-ID and completes the ranging of the ONU/ONT allocated with a formal ONU-ID. The optical line terminal 300 performs data interaction with the ONU/ONT allocated with a formal ONU-ID to carry out registration of the ONU/ONT. After the registration succeeds, the OLT performs data interaction with the ONU/ONT that is registered successfully, so as to configure a service parameter for the ONU/ONT that is registered successfully.

By using the foregoing technical solutions, the optical line terminal 300 may be, during ONU registration and authentication, plug-and-play, without needing to input authentication information in the OLT, which improves automation and flexibility of authentication.

An embodiment of the present invention further provides an optical network system, and a specific networking structure is shown in FIG. 1. The optical network system includes the optical line terminal 300 provided by the embodiments of the present invention and at least one optical network terminal. The optical line terminal 300 is connected to the at least one optical network terminal by using an optical distribution network. The optical line terminal 300 includes a first storage module 3001, a receiving module 3002, a determining module 3003, a distribution module 3004, and a second storage module 3005.

The first storage module 3001 is configured to store an authentication parameter of an optical network terminal. The authentication parameter stored in the first storage module 3001 may be configured by using an operation management system of the optical line terminal, or configured in an external input manner, for example, a command line and a Web page.

The receiving module 3002 is configured to receive a serial number SN, an authentication parameter, or a Password sent by the terminal ONU/ONT. The receiving module 3002 includes two subunits: a sending unit and a receiving unit. The sending unit is configured to send a message to the ONU/ONT to request an SN, an authentication parameter, and a Password. The receiving unit is configured to receive the message of the SN, authentication parameter, and Password reported by the ONU/ONT according to a request sent by the sending unit.

The determining module 3003 is configured to determine whether the authentication parameter received by the receiving module 3002 matches the authentication parameter stored in the first storage module 3001, so as to determine whether the terminal is an authorized terminal. The determining module 3003 outputs determination result information. For example, the determining module 3003 outputs matching information or mismatching information.

The distribution module 3004 is configured to allocate a terminal ID for a terminal and output the terminal ID. The distribution module 3004 may allocate a terminal ID for a terminal before the determining module 3003 performs determining, or allocate a terminal ID for a terminal after the determining module 3003 performs determining.

The second storage module 3005 is configured to, after the determining module 3003 outputs the matching determination result information, store the authentication parameter received by the receiving module 3002 and the terminal ID output by the distribution module 3004. The authentication parameter and terminal ID stored in the second storage module 3005 are a terminal serial number and terminal ID of an authorized terminal that is automatically detected.

For content of message interaction between the optical line terminal 300 and optical network terminal, reference may be made to FIG. 2 and the description of the embodiment corresponding to FIG. 2, and details are not described herein again.

By using the foregoing technical solutions, the optical line terminal 300 may be, during ONU registration and authentication, plug-and-play, without needing to input authentication information in the OLT, which improves automation and flexibility of authentication.

The foregoing descriptions are merely several embodiments of the present invention, a person skilled in the art may make various modifications or variants according to disclosures of the application file, without departing from the scope of the present invention.

## Claims

1. A terminal authentication method in a passive optical network, PON, wherein the PON comprises an optical line terminal, OLT and at least one optical network terminal, ONT, the OLT is connected to the at least one ONT by using an optical distribution network, ODN, and an authentication parameter is preconfigured on the OLT; the method comprising:
receiving, by the OLT, a registration request that carries an authentication parameter sent by the ONT, wherein the authentication parameter is used to identify a type of the ONT; wherein the type of the ONT is an ONT applied to a Gigabit-Capable Passive Optical Network, GPON or an ONT applied to an Ethernet passive optical network, EPON, and
determining (S206), by the OLT, whether the authentication parameter sent by the ONT matches the authentication parameter preconfigured on the OLT, and if yes, confirming that the ONT of the same type is an authorized ONT.

2. The method according to claim 1, further comprising:
recording, by the OLT, a terminal serial number obtained from the authorized terminal, and recording a terminal ID allocated for the authorized ONT.

3. The method according to claim 1 or 2, wherein the authentication parameter is transmitted by using an ONT management and control interface message.

4. The method according to any one of claims 1 to 3, before the receiving, by the OLT, a registration request carries an authentication parameter sent by the ONT, further comprising:
receiving, (S205) by the OLT, a terminal serial number sent by the ONT, and allocating a temporary terminal ID for the ONT; and
requesting, by the OLT, the authentication parameter of the ONT after completing ranging of the terminal with the temporary terminal ID.

5. The method according to claim 2, wherein the recording, by the OLT, a terminal serial number obtained from the authorized terminal, and recording a terminal ID allocated for the authorized terminal, comprises:
recording, by the OLT, a serial number of the authorized terminal received by the OLT; and
allocating, by the OLT, a formal terminal ID for the authorized terminal, and recording the formal terminal ID of the authorized terminal.

6. An optical line terminal, OLT (300), comprising:
a first storage module (3001), configured to store an authentication parameter preconfigured on an optical network terminal, ONT, wherein the authentication parameter is used to identify a type of the ONT;
a receiving module (3002), configured to receive a registration request that carries an authentication parameter sent by the ONT, wherein the authentication parameter is used to identify a type of the ONT; and
a processing module, configured to determine whether the authentication parameter sent by the ONT matches the authentication parameter preconfigured on the OLT, and if yes, authorizing that the ONT of the same type is an authorized ONT; wherein the type of the ONT is an ONT applied to a Gigabit-Capable Passive Optical Network, GPON or an ONT applied to an Ethernet passive optical network, EPON.

7. The OLT according to claim 6, wherein the receiving module is further configured to receive a terminal serial number.

8. The OLT according to claim 6 or 7, further comprising:
a distribution module (3004), configured to allocate a terminal ID for the ONT; and
a second storage module (3005), configured to, after authorizing that the ONT of the same type is an authorized ONT, store the serial number of the ONT received by the receiving module and the terminal ID output by the distribution module.

9. The OLT according to claim 8, wherein the distribution module comprises:
a determining submodule, configured to determine whether the serial number of the ONT received by the receiving module is recorded in the serial number of the ONT stored in the second storage module; and
a distribution submodule, configured to allocate a terminal ID for the ONT according to a determination result of the determining submodule, if yes, allocate a formal terminal ID for the ONT, and if no, allocate a temporary terminal ID for the terminal; and trigger ranging processing of the OLT.

10. The OLT according to any one of claims 6 to 9, wherein the receiving module comprises:
a first request submodule, configured to request a terminal serial number of the ONT;
a second request submodule, configured to request, after the OLT on which the second request submodule is located completes ranging, the authentication parameter of the ONT; and
a receiving submodule, configured to receive the authentication parameter and serial number of the ONT.

11. An optical network system, comprising: an optical line terminal, OLT, (300) and at least one optical network terminal, ONT, wherein the OLT is connected to the at least one ONT by using an optical distribution network, ODN, and **characterized in that**, the OLT is the OLT (300) according to any one of claims 6 to 10;
the ONT is configured to, according to a received request of the OLT, send a registration request carries an authentication parameter to the OLT.

12. The optical network system according to claim 11, wherein the ONT is further configured to, according to a request of the OLT, send a terminal serial number to the OLT.

## Patentansprüche

1. Endgeräteauthentifizierungsverfahren in einem passiven optischen Netz, PON, wobei das PON einen optischen Leitungsabschluss, OLT, und wenigstens einen optischen Netzabschluss, ONT, umfasst, wobei der OLT mit dem wenigstens einen ONT unter Verwendung eines optischen Verteilungsnetzes, ODN, verbunden ist und ein Authentifizierungsparameter auf dem OLT vorkonfiguriert ist; wobei das Verfahren Folgendes umfasst:
Empfangen durch den OLT einer Registrierungsanforderung, die einen durch den ONT gesendeten Authentifizierungsparameter führt, wobei der Authentifizierungsparameter verwendet wird, um einen Typ des ONT zu identifizieren; wobei der Typ des ONT ein ONT ist, der auf ein Gigabit-fähiges passives optisches Netz, GPON, angewandt ist, oder ein ONT, der auf ein passives optisches Ethernet-Netz, EPON, angewandt ist, und Bestimmen (S206) durch den OLT, ob der durch den ONT gesendete Authentifizierungsparameter mit dem auf dem OLT vorkonfigurierten Authentifizierungsparameter übereinstimmt, und falls ja, Bestätigen, dass der ONT vom gleichen Typ ein autorisierter ONT ist.

2. Verfahren nach Anspruch 1, das ferner Folgendes umfasst:
Aufzeichnen durch den OLT einer laufenden Nummer des Abschlusses, die von dem autorisierten Abschluss erhalten wird, und Aufzeichnen einer Abschluss-ID, die für den autorisierten ONT zugewiesen ist.

3. Verfahren nach Anspruch 1 oder 2, wobei der Authentifizierungsparameter unter Verwendung einer ONT-Management- und Steuerungsschnittstellennachricht übertragen wird.

4. Verfahren nach einem der Ansprüche 1 bis 3, das vor dem Empfangen durch den OLT einer Registrierungsanforderung, die einen durch den ONT gesendeten Authentifizierungsparameter führt, ferner Folgendes umfasst:
Empfangen (S205) durch den OLT einer durch den ONT gesendeten laufenden Nummer des Abschlusses und Zuweisen einer temporären Abschluss-ID für den ONT; und
Anfordern durch den OLT des Authentifizierungsparameters des ONT nach dem Fertigstellen des Klassifizierens des Abschlusses mit der temporären Abschluss-ID.

5. Verfahren nach Anspruch 2, wobei das Aufzeichnen durch den OLT einer laufenden Nummer des Abschlusses, die von dem autorisierten Abschluss erhalten wird, und Aufzeichnen einer Abschluss-ID, die für den autorisierten Abschluss zugewiesen ist, Folgendes umfasst:
Aufzeichnen durch den OLT einer laufenden Nummer des autorisierten Abschlusses, die durch den OLT empfangen wird; und
Zuweisen durch den OLT einer offiziellen Abschluss-ID für den autorisierten Abschluss und Aufzeichnen der offiziellen Abschluss-ID des autorisierten Abschlusses.

6. Optischer Leitungsabschluss, OLT (300), der Folgendes umfasst:
ein erstes Speichermodul (3001), das konfiguriert ist, einen auf einem optischen Netzabschluss, ONT, vorkonfigurierten Authentifizierungsparameter zu speichern, wobei der Authentifizierungsparameter verwendet wird, um einen Typ des ONT zu identifizieren;
ein Empfangsmodul (3002), das konfiguriert ist, eine Registrierungsanforderung, die einen durch den ONT gesendeten Authentifizierungsparameter führt, zu empfangen, wobei der Authentifizierungsparameter verwendet wird, um einen Typ des ONT zu identifizieren; und
ein Verarbeitungsmodul, das konfiguriert ist zu bestimmen, ob der durch den ONT gesendete Authentifizierungsparameter mit dem auf dem OLT vorkonfigurierten Authentifizierungsparameter übereinstimmt, und falls ja Autorisieren, dass der ONT vom gleichen Typ ein autorisierter ONT ist; wobei der Typ des ONT ein ONT ist, der auf ein Gigabit-fähiges passives optisches Netz, GPON, angewandt ist, oder ein ONT, der auf ein passives optisches Ethernet-Netz, EPON, angewandt ist.

7. OLT nach Anspruch 6, wobei das Empfangsmodul ferner konfiguriert ist, eine laufende Nummer des Abschlusses zu empfangen.

8. OLT nach Anspruch 6 oder 7, der ferner Folgendes umfasst:
ein Verteilungsmodul (3004), das konfiguriert ist, eine Abschluss-ID für den ONT zuzuweisen; und
ein zweites Speichermodul (3005), das konfiguriert ist, nach dem Autorisieren, dass der ONT vom gleichen Typ ein autorisierter ONT ist, die durch das Empfangsmodul empfangene laufende Nummer des ONT und die durch das Verteilungsmodul ausgegebene Abschluss-ID zu speichern.

9. OLT nach Anspruch 8, wobei das Verteilungsmodul Folgendes umfasst:
ein Bestimmungsuntermodul, das konfiguriert ist zu bestimmen, ob die durch das Empfangsmodul empfangene laufende Nummer des ONT in der laufenden Nummer des ONT, die in dem zweiten Speichermodul gespeichert ist, aufgezeichnet ist; und
ein Verteilungsuntermodul, das konfiguriert ist, eine Abschluss-ID für den ONT gemäß einem Bestimmungsergebnis des Bestimmungsuntermoduls zuzuweisen, falls ja Zuweisen einer offiziellen Abschluss-ID für den ONT, falls nein Zuweisen einer temporären Abschluss-ID für den Abschluss; und die Klassifizierungsverarbeitung des OLT zu triggern.

10. OLT nach einem der Ansprüche 6 bis 9, wobei das Empfangsmodul Folgendes umfasst:
ein erstes Anforderungsuntermodul, das konfiguriert ist, eine laufende Nummer des Abschlusses von dem ONT anzufordern;
ein zweites Anforderungsuntermodul, das konfiguriert ist, nachdem der OLT, auf dem sich das zweite Anforderungsuntermodul befindet, die Klassifizierung fertiggestellt hat, den Authentifizierungsparameter des ONT anzufordern; und
ein Empfangsuntermodul, das konfiguriert ist, den Authentifizierungsparameter und die laufende Nummer des ONT zu empfangen.

11. Optisches Netzsystem, das Folgendes umfasst: einen optischen Leitungsabschluss, OLT, (300) und wenigstens einen optischen Netzabschluss, ONT, wobei der OLT mit dem wenigstens einen ONT unter Verwendung eines optischen Verteilungsnetzes, ODN, verbunden ist, und **dadurch gekennzeichnet, dass** der OLT der OLT (300) nach einem der Ansprüche 6 bis 10 ist;
wobei der ONT konfiguriert ist, gemäß einer empfangenen Anforderung des OLT eine Registrierungsanforderung, die einen Authentifizierungsparameter führt, zu dem OLT zu senden.

12. Optisches Netzsystem nach Anspruch 11, wobei der ONT ferner konfiguriert ist, gemäß einer Anforderung des OLT eine laufende Nummer des Abschlusses zu dem OLT zu senden.

## Revendications

1. Procédé d'authentification de terminal dans un réseau optique passif (PON), le PON comprenant un terminal de ligne optique (OLT) et au moins un terminal de réseau optique (ONT), l'OLT étant connecté à l'au moins un ONT au moyen d'un réseau de distribution optique (ODN) et un paramètre d'authentification étant préconfiguré sur l'OLT ; le procédé comprenant les étapes consistant à :
recevoir, par l'OLT, une demande d'inscription qui transporte un paramètre d'authentification envoyé par l'ONT, le paramètre d'authentification étant utilisé pour identifier un type de l'ONT ; le type de l'ONT étant un ONT appliqué à un réseau optique passif compatible Gigabit (GPON) ou un ONT appliqué à un réseau optique passif Ethernet (EPON), et
déterminer (S206), par l'OLT, si le paramètre d'authentification envoyé par l'ONT concorde avec le paramètre d'authentification préconfiguré sur l'OLT et, si oui, confirmer que l'ONT du même type est un ONT autorisé.

2. Procédé selon la revendication 1, comprenant en outre l'étape consistant à :
enregistrer, par l'OLT, un numéro de série de terminal obtenu auprès du terminal autorisé et enregistrer un ID de terminal attribué à l'ONT autorisé.

3. Procédé selon la revendication 1 ou 2, dans lequel le paramètre d'authentification est transmis au moyen d'un message d'interface de gestion et de contrôle d'ONT.

4. Procédé selon l'une quelconque des revendications 1 à 3, comprenant en outre, avant la réception, par l'OLT, d'une demande d'inscription qui transporte un paramètre d'authentification envoyé par l'ONT, les étapes consistant à :
recevoir (S205), par l'OLT, un numéro de série de terminal envoyé par l'ONT et attribuer un ID de terminal temporaire à l'ONT ; et
demander, par l'OLT, le paramètre d'authentification de l'ONT après la réalisation d'une mesure de distance du terminal avec l'ID de terminal temporaire.

5. Procédé selon la revendication 2, dans lequel l'enregistrement, par l'OLT, d'un numéro de série de terminal obtenu auprès du terminal autorisé et l'enregistrement d'un ID de terminal attribué au terminal autorisé comprennent les étapes consistant à : enregistrer, par l'OLT, un numéro de série du terminal autorisé, reçu par l'OLT ; et attribuer, par l'OLT, un ID de terminal officiel au terminal autorisé et enregistrer l'ID de terminal officiel du terminal autorisé.

6. Terminal de ligne optique (OLT) (300), comprenant :
un premier module de stockage (3001), configuré pour stocker un paramètre d'authentification préconfiguré sur un terminal de réseau optique (ONT), le paramètre d'authentification étant utilisé pour identifier un type de l'ONT ;
un module de réception (3002), configuré pour recevoir une demande d'inscription qui transporte un paramètre d'authentification envoyé par l'ONT, le paramètre d'authentification étant utilisé pour identifier un type de l'ONT ; et
un module de traitement, configuré pour déterminer si le paramètre d'authentification envoyé par l'ONT concorde avec le paramètre d'authentification préconfiguré sur l'OLT et, si oui, autoriser que l'ONT du même type soit un ONT autorisé ; le type de l'ONT étant un ONT appliqué à un réseau optique passif compatible Gigabit (GPON) ou un ONT appliqué à un réseau optique passif Ethernet (EPON).

7. OLT selon la revendication 6, dans lequel le module de réception est en outre configuré pour recevoir un numéro de série de terminal.

8. OLT selon la revendication 6 ou 7, comprenant en outre :
un module de distribution (3004), configuré pour attribuer un ID de terminal à l'ONT ; et
un second module de stockage (3005), configuré pour, après avoir autorisé que l'ONT du même type soit un ONT autorisé, stocker le numéro de série de l'ONT, reçu par le module de réception, et l'ID de terminal, délivré par le module de distribution.

9. OLT selon la revendication 8, dans lequel le module de distribution comprend :
un sous-module de détermination, configuré pour déterminer si le numéro de série de l'ONT reçu par le module de réception est enregistré dans le numéro de série de l'ONT, stocké dans le second sous-module de stockage ; et
un sous-module de distribution, configuré pour attribuer un ID de terminal à l'ONT selon un résultat de détermination du sous-module de détermination et, si oui, attribuer un ID de terminal officiel à l'ONT et, si non, attribuer un ID de terminal temporaire au terminal ; et déclencher un traitement de mesure de distance de l'OLT.

10. OLT selon l'une quelconque des revendications 6 à 9, dans lequel le module de réception comprend :
un premier sous-module de demande, configuré pour demander un numéro de série de terminal de l'ONT;
un second sous-module de demande, configuré pour demander, après que l'OLT sur lequel se trouve le second sous-module de distance a achevé la mesure de distance, le paramètre d'authentification de l'ONT ; et
un sous-module de réception, configuré pour recevoir le paramètre d'authentification et le numéro de série de l'ONT.

11. Système de réseau optique, comprenant : un terminal de ligne optique (OLT) (300) et au moins un terminal de réseau optique (ONT), l'OLT étant connecté à l'au moins un ONT au moyen d'un réseau de distribution optique (ODN) et le système étant **caractérisé en ce que** l'OLT est l'OLT (300) selon l'une quelconque des revendications 6 à 10 ;
l'ONT étant configuré pour, selon une demande reçue de l'OLT, envoyer à l'OLT une demande d'inscription qui transporte un paramètre d'authentification.

12. Système de réseau optique selon la revendication 11, dans lequel l'ONT est en outre configuré pour, selon une demande de l'OLT, envoyer un numéro de série de terminal à l'OLT.
